# EUROPEAN PATENT SPECIFICATION

(11) **EP 1 798 395 B1**
(45) Date of publication and mention of the grant of the patent: **25.06.2008**
(21) Application number: 05027338.2
(22) Date of filing: 14.12.2005
(51) Int. Cl.: F02B 61/02, B62M 7/12

(54) **Vehicle transmission**
Fahrzeuggetriebe
Transmission de véhicule

(43) Date of publication of application: 20.06.2007
(73) Proprietor: Kwang Yang Motor Co., Ltd., Kaohsiung (TW)
(72) Inventor: Ho, Chao-Chang, Feng Shan City, Kaosiung Hsien (TW)
(74) Representative: Karlhuber, Mathias

(56) References cited:
- EP-A- 1 020 350
- EP-A- 1 143 166
- EP-A- 1 201 535
- GB-A- 2 330 391
- US-A- 5 033 598
- US-A1- 2002 063 032
- PATENT ABSTRACTS OF JAPAN vol. 1999, no. 10, 31 August 1999 (1999-08-31) -& JP 11 125276 A (SUZUKI MOTOR CORP), 11 May 1999 (1999-05-11)

## Description

This invention relates to a vehicle transmission, and more particularly to a vehicle transmission that includes a wet clutch installed on a crankshaft.

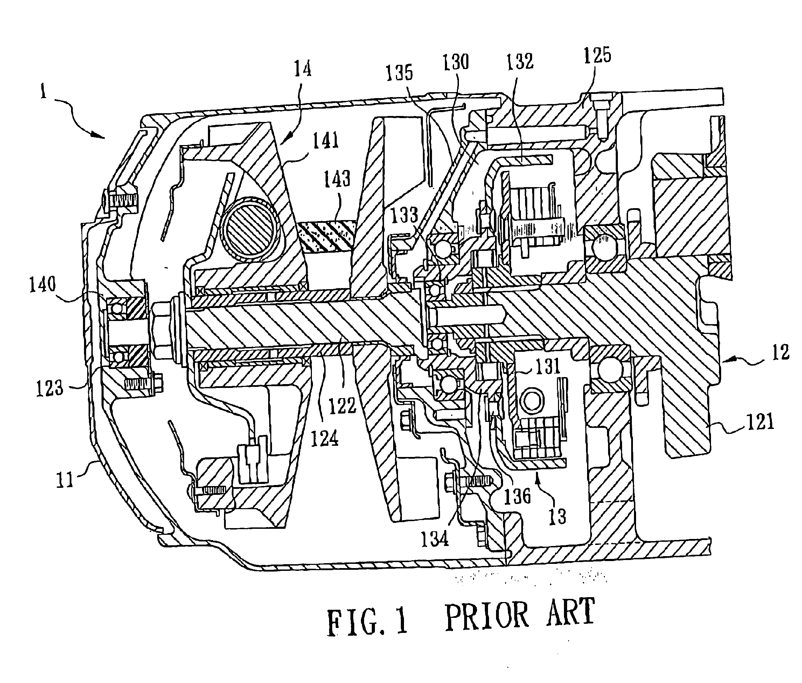

Referring to Fig. 1, a conventional vehicle transmission 1 is adapted to transmit power from an engine of a vehicle, such as an all-terrain vehicle, a motorcycle, etc., to a rear wheel (not shown) of the vehicle. The conventional vehicle transmission 1 includes a crankshaft box unit 12 driven by the engine, a clutch unit 13 disposed in proximity to the crankshaft box unit 12, and a transmission box unit 14 disposed in proximity to the clutch unit 13.

The crankshaft box unit 12 includes a crankshaft box 125, a crankshaft 121 disposed in the crankshaft box 125 and rotatable by the engine, a driven shaft 122 having two ends connected respectively and pivotally to the crankshaft 121 and a transmission box 140 of the transmission box unit 14, a first bearing 123 disposed between the transmission box 140 and the driven shaft 122, and a self-lubricating bearing 124 sleeved on the driven shaft 122.

The clutch unit 13 includes a seal cover 135 cooperating with the crankshaft box 125 of the crankshaft box unit 12 to define a clutch chamber 130, a wet clutch 131 sleeved on the crankshaft 121 and rotatable with the crankshaft 121, a sleeve body 134 sleeved fixedly on the driven shaft 122, an outer shield 132 connected fixedly to the sleeve body 134 by a plurality of rivets 136 (only two are shown) and disposed around the wet clutch 131, and a second bearing 133 disposed between the sleeve body 134 and the crankshaft 121. The driven shaft 122 extends through the seal cover 135. When the crankshaft 121 rotates, the wet clutch 131 comes into frictional contact with the outer shield 132 so as to allow for co-rotation of the driven shaft 122 and the crankshaft 121.

The transmission box unit 14 includes a driving pulley unit 141 sleeved on the driven shaft 122, a coupling shaft (not shown) connected fixedly to the rear wheel, a driven pulley unit (not shown) sleeved on the coupling shaft, and a V-belt 143 trained on the driving pulley unit 141 and the driven pulley unit so as to transfer rotation of the driving pulley unit 141 to the driven pulley unit. When the driven shaft 122 rotates at a speed smaller than a threshold speed, the pitch diameter of the driving pulley unit 141 is smaller than that of the driven pulley unit. In this state, the rotation speed of the rear wheel is smaller than that of the driven shaft 122. When the driven shaft 122 rotates at a speed greater than the threshold speed, the pitch diameter of the driving pulley unit 141 is greater than that of the driven pulley unit. In this state, the rotation speed of the rear wheel is greater than that of the driven shaft 122.

When the engine is in an idle speed condition, although the crankshaft 121 and the wet clutch 131 rotate, the wet clutch 131 is spaced apart from the outer shield 132. As such, power cannot be transmitted from crankshaft 121 to the driven shaft 122 and, thus, the rear wheel. When a throttle is operated to increase the rotation speed of the crankshaft 121 and the wet clutch 131, the wet clutch 131 engages the outer shield 132 so as to allow for transmission of power from the crankshaft 121 to the driven shaft 122. When the engine is in an acceleration condition, the pitch diameter of the driving pulley unit 141 increases, while the pitch diameter of the driven pulley unit is reduced, thereby resulting in an increase in the rotation speed of the rear wheel. When the engine is in a deceleration condition, the pitch diameter of the driving pulley unit 141 reduces, while the pitch diameter of the driven pulley unit is increased, thereby resulting in a decrease in the rotation speed of the rear wheel.

Since the crankshaft 121 and the driven shaft 122 are coupled to each other at a position between the wet clutch 131 and the outer shield 132, many elements need to cooperate with the crankshaft 121, the driven shaft 122, the wet clutch 131, and the outer shield 132 in a highly precise manner. This results in difficulties with respect to assembly of these elements.

The object of this invention is to provide a vehicle transmission that can be assembled easily.

According to this invention, a vehicle transmission includes a crankshaft box unit, a clutch unit, and a transmission box unit. The crankshaft box unit includes a crankshaft box, a crankshaft expending through the clutch unit and into the transmission box unit, a driven shaft disposed in the transmission box unit and having an end sleeved coaxially on a connecting end of the crankshaft, and a bearing disposed between the crankshaft and the driven shaft. The clutch unit includes a seal-cover disposed in proximity to the crankshaft box, and a wet clutch disposed between the seal cover and the crankshaft box. The crankshaft extends through the seal cover. The connecting end of the crankshaft is disposed in a transmission, box of the transmission box unit. As such, the vehicle transmission of this invention can be assembled easily.

These and other features and advantages of this invention will become apparent in the following detailed description of a preferred embodiment of this invention, with reference to the accompanying drawings, in which:
Fig. 1 is a sectional view of a conventional vehicle transmission;
Fig. 2 is a schematic view of the preferred embodiment of a vehicle transmission according to this invention; and
Fig. 3 is a fragmentary sectional view of the preferred embodiment, illustrating flow paths of lubricating oil.

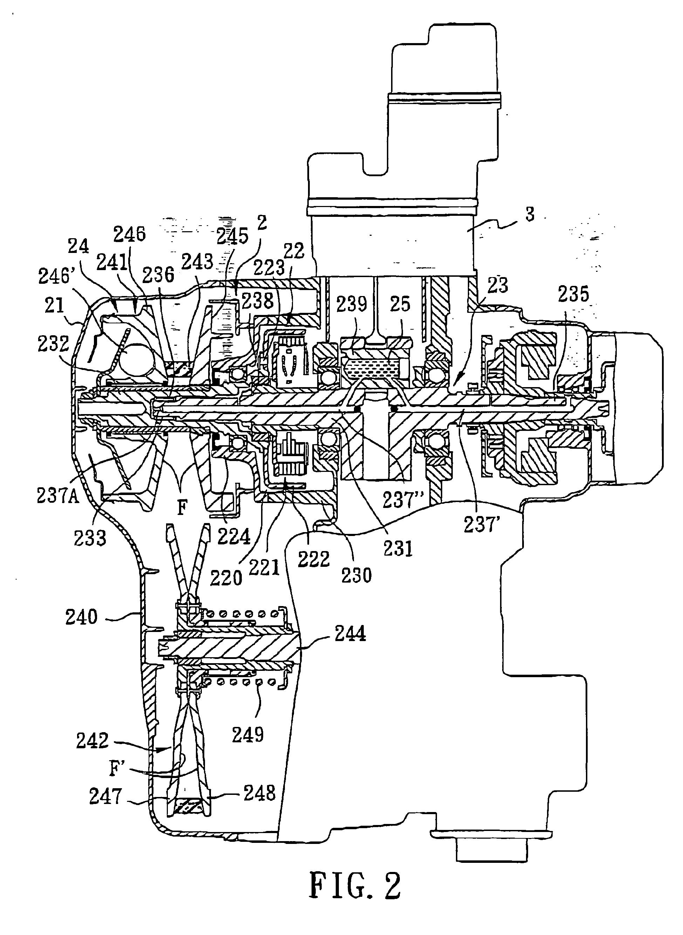

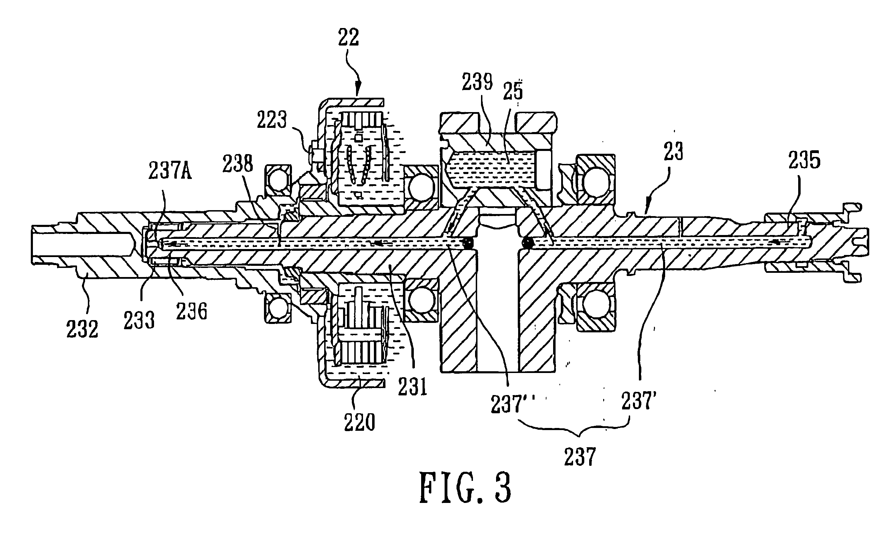

Referring to Figs. 2 and 3, the preferred embodiment of a vehicle transmission 2 according to this invention is suitable for a scooter, an all-terrain vehicle, etc., and is adapted for transmitting power from an engine 3 to a rear wheel (not shown).

The vehicle transmission 2 includes a clutch unit 22, a crankshaft box unit 23, a transmission box unit 24, and lubricating oil 25 disposed in the clutch unit 22 and the crankshaft box unit 23. Power can be transmitted from the engine 3 to the transmission box unit 24 via the crankshaft box unit 23 and the clutch unit 22 so as to rotate the rear wheel.

The crankshaft box unit 23 includes a crankshaft box 230, a crankshaft 231, a driven shaft 232, and a bearing 233. The crankshaft 231 is journalled within the crankshaft box 230, and is rotatable by the engine 3. The bearing 233 is disposed between the crankshaft 231 and the driven shaft 232 so as to facilitate relative rotation between the crankshaft 231 and the driven shaft 232.

The clutch unit 22 is disposed in proximity to the crankshaft box unit 23, and includes a seal cover 224, a wet clutch 221, and a bowl-shaped outer shield 222. The seal cover 224 cooperates with the crankshaft box 230 to define a clutch chamber 220 therebetween- The wet clutch 221 is disposed within the clutch chamber 220, and is rotatable with the crankshaft 231 in a known manner. The outer shield 222 is disposed in the clutch chamber 220, and has a central portion connected fixedly to the driven shaft 232 by rivets 223 (only one is shown) and an annular outer periphery disposed around the wet clutch 221 in a known manner. When the rotation speed of the crankshaft 231 reaches a predetermined speed, the wet clutch 221 comes into frictional contact with the outer shield 222 in a known manner so as to allow for co-rotation of the crankshaft 231 and the outer shield 222. The bearing 233 is configured as a roller bearing.

The crankshaft 231 extends through the clutch chamber 220 and the seal cover 224, and has an open oil inlet end 235 and an open connecting end 236 that are opposite to each other. The connecting end 236 is disposed in the transmission box unit 24. The driven shaft 232 is disposed in the transmission box unit 24, and has a right end sleeved coaxially on the connecting end 236 of the crankshaft 231.

The crankshaft 231 further has an axial central passage unit 237, a side passage 238, and a hollow conduit member 239. The central passage unit 237 has an upstream passage portion 237' adapted for permitting flow of the lubricating oil 25 therethrough when the lubricating oil 25 is fed into the oil inlet end 235 of the crankshaft 231, and a downstream passage portion 237" spaced apart from and aligned with the upstream passage portion 237'. The conduit member 239 defines an interior chamber communicated with the upstream and downstream passage portions 237', 237" so as to allow for flow of the lubricating oil 25 from the upstream passage portion 237' into the downstream passage portion 237" via the interior chamber in the conduit member 239. The side passage 238 is perpendicular to the upstream and downstream passage portions 237', 237", and has two ends communicated respectively with the downstream passage portion. 237" and the clutch chamber 220 so as to allow for flow of the lubricating oil 25 from the downstream passage portion 237" into the clutch chamber 220 via the side passage 238. The downstream passage portion 237" has a bearing-connecting end (237A) that is formed in the connecting end 236 of the crankshaft 231 and that is communicated with the bearing 233. The bearing-connecting end (237A) has a diameter smaller than that of the remaining portion of the downstream passage portion 237" so as to throttle the flow rate of the lubricating oil 25 when flowing from the central passage unit 237 onto the bearing 233. Alternatively, the diameter of the bearing-connecting end (237A) is the same as that of the remaining portion of the downstream passage portion 237", and a throttle valve is disposed within the bearing-connecting end (237A) for performing the same function.

When the lubricating oil 25 is fed into the oil inlet end 235 of the crankshaft 231, it flows from the upstream passage portion 237' of the central passage unit 237 into the downstream passage portion 237" of the central passage unit 237 via the conduit member 239. Subsequently, the lubricating oil 25 flows from the downstream passage portion 237" onto the bearing 233 via the bearing-connecting end (237A), and into the clutch chamber 220 via the side passage 238. Hence, the wet clutch 221 can move within the lubricating oil 25 in the clutch chamber 220.

The transmission box unit 24 is disposed in proximity to the clutch unit 22, and includes a transmission box 240, a driving pulley unit 241, a driven pulley unit 242, a V-belt 243, and a coupling shaft 244. The connecting end 236 of the crankshaft 231 is located in the transmission box 240. A left end of the driven shaft 232 is journalled on a vertical wall of the transmission box 240. The driving pulley unit 241 is disposed in the transmission box 240, and includes a fixed driving pulley half 245 sleeved fixedly on the driven shaft 232 and adjacent to the crankshaft box unit 23, and a movable driving pulley half 246 sleeved movably on the driven shaft 232 and disposed between, the fixed driving pulley half 245 and the vertical wall of the transmission box 240 in a known manner. In this embodiment, the crankshaft 231 extends through the fixed driving pulley half 245. When the rotation speed of the driven shaft 232 increases, a ball unit 246' moves outwardly (i.e., away from the driven shaft 232) by centrifugal force so as to move the movable driving pulley half 246 toward the fixed driving pulley half 245 in a known manner. This increases the pitch diameter of the driving pulley unit 241. When the rotation, speed of the driven shaft 232 reduces, the movable driving pulley half 246 moves away from the fixed driving pulley half 245. This reduces the pitch diameter of the driving pulley unit 241. The fixed and movable driving pulley halves 245, 246 are formed with juxtaposed frusto-conical surfaces (F) facing each other in a known manner.

The coupling shaft 244 is journalled in the transmission box 240 under the driven shaft 232, and is connected fixedly to the rear wheel. The driven pulley unit 242 is also disposed in the transmission box 240, and includes a fixed driven pulley half 247 sleeved fixedly on the coupling shaft 244, a movable driven pulley half 248 sleeved movably on the coupling shaft 244, and a coiled compression spring 249 for biasing the movable driven pulley half 248 toward the fixed driven pulley -half 247. The fixed and movable driven pulley halves 247, 248 are formed with juxtaposed frusto-conical surfaces (F') facing each other. The V-belt 243 is trained on the driving and driven pulley units 241, 242, and extends between the juxtaposed frusto-conical surfaces (F, F') of the fixed and movable driving pulley halves 245, 246, and the fixed and movable driving pulley halves 247, 248. As such, rotation of the driving pulley unit 241 and the driven shaft 232 can be transferred to the driven pulley unit 242 and the coupling shaft 244. Operation of the transmission box unit 24 is similar to that of the aforesaid conventional vehicle transmission 1 (see Fig. 1), and will not be described in detail.

The vehicle transmission 2 of this invention has the following advantages:
(1) Because the crankshaft 231 extends through the seal cover 224, the connecting end 236 of the crankshaft 231 can be mounted easily to the driven shaft 232. As a consequence, the vehicle transmission 2 can be assembled easily.
(2) The right end of the driven shaft 232 is sleeved coaxially on the connecting end 236 of the crankshaft 231. This facilitates rotation of the crankshaft 231 and the driven shaft 232 about the same rotating axis.
(3) The lubricating oil 25 is fed into the oil inlet end 235 of the central passage 237, and flows in the clutch unit 22 and the crankshaft box unit 23 along the flow paths indicated by the arrows in Fig. 3, thereby effectively lubricating and cooling rotating parts.

## Claims

1. A vehicle transmission (2) comprising:
a crankshaft box unit (23) including a crankshaft box (230) and a crankshaft (231) journalled within the crankshaft box (230);
a clutch unit (22) disposed in proximity to the crankshaft box unit (23) and including a seal cover (224) cooperating with the crankshaft box (230) to define a clutch chamber (220) therebetween, and a wet clutch (221) disposed within the clutch chamber (220) and rotatable with the crankshaft (231), the crankshaft (231) extending through the clutch chamber (220);
a transmission box unit (24) disposed in proximity to the clutch unit (22); and
lubricating oil (25) disposed in the clutch unit (22) and the crankshaft box unit (23);
**characterized in that** the crankshaft (231) of the crankshaft box unit (23) extends through the seal cover (224) of the clutch unit (22), and has a connecting end disposed in the transmission box unit (24), the crankshaft box unit (23) further including a driven shaft (232) disposed in the transmission box unit (24) and having an end sleeved coaxially on the connecting end (236) of the crankshaft (231), and a bearing (233) disposed between the connecting end (236) of the crankshaft (231) and the end of the driven shaft (232).

2. The vehicle transmission (2) as claimed in Claim 1, further **characterized in that** the bearing (233) of the crankshaft box unit (23) is configured as a roller bearing.

3. The vehicle transmission (2) as claimed in Claim 1, further **characterized in that** the clutch unit (22) further includes an outer shield (222) disposed in the clutch chamber (220) and having an annular outer periphery disposed around the wet clutch (221), the outer shield (222) being connected fixedly to the driven shaft (312).

4. The vehicle transmission (2) as claimed in Claim 1, further **characterized in that** the transmission box unit (24) includes:
a transmission box (240);
a driving pulley unit (241) disposed in the transmission box (240) and rotatable by the crankshaft (231), the driving pulley unit (241) including a fixed driving pulley half (245) sleeved fixedly on the driven shaft (232), and a movable driving pulley half (246) sleeved movably on the driven shaft (232), the movable driving pulley half (246) being movable toward the fixed driving pulley half (245) when a rotation speed of the driven shaft (232) increases, the movable driving pulley half (246) being movable away from the fixed driving pulley half (245) when the rotation speed of the driven shaft (232) reduces, the fixed and movable driving pulley halves (245, 246) having juxtaposed frusto-conical surfaces (F) facing each other;
a coupling shaft (244) journalled in the transmission box (240) ;
a driven pulley unit (242) disposed in the transmission box (240) and including a fixed driven pulley half (247) sleeved fixedly on the coupling shaft (244), and a movable driven pulley half (248) sleeved movably on the coupling shaft (244), the fixed and movable driven pulley halves (247, 248) having juxtaposed frusto-conical surfaces (F') facing toward each other;
a v-belt (243) trained on the driving and driven pulley units (241, 242) and extending between the juxtaposed frusto-conical surfaces (F, F') of the fixed and movable driving pulley halves (245, 246) and the fixed and movable driven pulley halves (247, 249) so as to transfer rotation of the driving pulley unit (241) to the driven pulley unit (242); and
a spring (249) for biasing the movable driven pulley half (248) toward the fixed driven pulley half (247).

5. The vehicle transmission (2) as claimed in Claim 1, further **characterized in that** the crankshaft (231) of the crankshaft box unit (23) extends through the fixed driving pulley half (245) of the driving pulley unit (241) of the transmission box unit (24).

6. The vehicle transmission (2) as claimed in Claim 1, further **characterized in that** the crankshaft (231) includes:
an axial central passage unit (237) having an upstream passage portion (237') adapted for permitting flow of the lubricating oil (25) therethrough when the lubricating oil (25) is fed into the crankshaft (231), and a downstream passage portion (237") spaced apart from and aligned with the upstream passage portion (237') and having a bearing-connecting end (237A) that is formed in the connecting end (236) of the crankshaft (231) and that is communicated with the bearing (233) of the crankshaft box unit (23));
a hollow conduit member (239) defining an interior chamber communicated with the upstream and downstream passage portions (237', 237") of the central passage unit (237) so as to allow for flow of the lubricating oil (25) from the upstream passage portion (237') into the downstream passage portion (237") via the interior chamber in the conduit member (239); and
a side passage (238) having two ends communicated respectively with the downstream passage portion (237") of the central passage unit (237) and the clutch chamber (220) so as to allow for flow of the lubricating oil (25) from the downstream passage portion (237") into the clutch chamber (220) via the side passage (23B).

7. The vehicle transmission (2) as claimed in claim 6, further **characterized in that** the bearing-connecting end (237A) of the downstream passage portion (237") of the central passage unit (237) in the crankshaft (231) has a diameter that is smaller than that of the remaining portion of the downstream passage portion (237") so as to throttle a flow rate of the lubricating oil (25) when flowing from the central passage unit (237) onto the bearing (233).

## Patentansprüche

1. Fahrzeuggetriebe (2), enthaltend:
eine Kurbelwellengehäuseeinheit (23), die ein Kurbelwellengehäuse (230) und eine innerhalb des Kurbelwellengehäuses (230) gelagerte Kurbelwelle (231) umfasst;
eine Kupplungseinheit (22), die nahe an der Kurbelwellengehäuseeinheit (23) angeordnet ist und eine Dichtungsabdeckung (224) umfasst, die mit dem Kurbelwellengehäuse (230) zusammenwirkt, um dazwischen eine Kupplungskammer (220) zu bilden, sowie eine innerhalb der Kupplungskammer (220) angeordnete Nasskupplung (221), die mit der Kurbelwelle (231) drehbar ist, wobei die Kurbelwelle (231) durch die Kupplungskammer (220) verläuft;
eine nahe an der Kupplungseinheit (22) angeordnete Getriebegehäuseeinheit (24); und
in der Kupplungseinheit (22) und der Kurbelwellengehäuseeinheit (23) angeordnetes Schmieröl (25);
**dadurch gekennzeichnet, dass** die Kurbelwelle (231) der Kurbelwellengehäuseeinheit (23) durch die Dichtungsabdeckung (224) der Kupplungseinheit (22) verläuft und ein in der Getriebegehäuseeinheit (24) angeordnetes Anschlussende hat, wobei die Kurbelwellengehäuseeinheit (23) ferner eine Abtriebswelle (232) umfasst, die in der Getriebegehäuseeinheit (24) angeordnet ist und ein koaxial auf das Anschlussende (236) der Kurbelwelle (231) aufgeschobenes Ende hat, sowie ein Lager (233), das zwischen dem Anschlussende (236) der Kurbelwelle (231) und dem Ende der Abtriebswelle (232) angeordnet ist.

2. Fahrzeuggetriebe (2) nach Anspruch 1, ferner **dadurch gekennzeichnet, dass** das Lager (233) der Kurbelwellengehäuseeinheit (23) als ein Rollenlager konfiguriert ist.

3. Fahrzeuggetriebe (2) nach Anspruch 1, ferner **dadurch gekennzeichnet, dass** die Kupplungseinheit (22) ferner eine äußere Abschirmung (222) umfasst, die in der Kupplungskammer (220) angeordnet ist und einen um die Nasskupplung (221) angeordneten ringförmigen äußeren Umfang hat, welche äußere Abschirmung (222) fest mit der Abtriebswelle (312) verbunden ist.

4. Fahrzeuggetriebe (2) nach Anspruch 1, ferner **dadurch gekennzeichnet, dass** die Getriebegehäuseeinheit (24) umfasst:
ein Getriebegehäuse (240);
eine Antriebsscheibeneinheit (241), die in dem Getriebegehäuse (240) angeordnet ist und durch die Kurbelwelle (231) drehbar ist, welche Antriebsscheibeneinheit (241) eine feststehende Antriebsscheibenhälfte (245), die fest auf die Abtriebswelle (232) aufgeschoben ist, und eine bewegliche Antriebsscheibenhälfte (246) umfasst, die beweglich auf die Abtriebswelle (232) aufgeschoben ist, welche bewegliche Antriebsscheibenhälfte (246) zu der feststehenden Antriebsscheibenhälfte (245) hin bewegbar ist, wenn eine Drehzahl der Abtriebswelle (232) zunimmt, welche bewegliche Antriebsscheibenhälfte (246) von der feststehenden Antriebsscheibenhälfte (245) weg bewegbar ist, wenn die Drehzahl der Abtriebswelle (232) abnimmt, wobei die feststehende und die bewegliche Antriebsscheibenhälfte (245, 246) nebeneinander liegende kegelstumpfförmige Oberflächen (F) haben, die aufeinander zu weisen;
eine Kupplungswelle (244), die in dem Getriebegehäuse (240) gelagert ist;
eine Abtriebsscheibeneinheit (242), die in dem Getriebegehäuse (240) angeordnet ist und eine feststehende Abtriebsscheibenhälfte (247) umfasst, die fest auf die Kupplungswelle (244) aufgeschoben ist, sowie eine bewegliche Abtriebsscheibenhälfte (248), die beweglich auf die Kupplungswelle (244) aufgeschoben ist, wobei die feststehende und die bewegliche Abtriebsscheibenhälfte (247, 248) nebeneinander liegende kegelstumpfförmige Oberflächen (F') haben, die aufeinander zu weisen;
einen Keilriemen (243), der auf die Antriebs- und Abtriebsriemenscheibeneinheit (241, 242) aufgelegt ist und zwischen den nebeneinander liegenden kegelstumpfförmigen Oberflächen (F, F') der feststehenden und der beweglichen Antriebsscheibenhälften (245, 246) und der feststehenden und der beweglichen Abtriebsscheibenhälften (247, 248) verläuft, um so die Umdrehung der Antriebsscheibeneinheit (241) auf die Abtriebsscheibeneinheit (242) zu übertragen; und
eine Feder (249), um die bewegliche Antriebsscheibenhälfte (248) zu der feststehenden Antriebsscheibenhälfte (247) hin vorzuspannen.

5. Fahrzeuggetriebe (2) nach Anspruch 1, ferner **dadurch gekennzeichnet, dass** die Kurbelwelle (231) der Kurbelwellengehäuseeinheit (23) durch die feststehende Antriebsscheibenhälfte (245) der Antriebsscheibeneinheit (241) der Getriebegehäuseeinheit (24) verläuft.

6. Fahrzeuggetriebe (2) nach Anspruch 1, ferner **dadurch gekennzeichnet, dass** die Kurbelwelle (231) umfasst:
eine axiale zentrale Kanaleinheit (237), die einen stromaufwärts gelegenen Kanalabschnitt (237') hat, der dafür ausgelegt ist, den Durchfluss von Schmieröl (25) zuzulassen, wenn das Schmieröl (25) in die Kurbelwelle (231) eingespeist wird, sowie einen stromabwärts gelegenen Kanalabschnitt (237"), der mit dem stromaufwärts gelegenen Kanalabschnitt (237') fluchtend ausgerichtet und von diesem beabstandet ist und der ein Lageranschlussende (237A) hat, das in dem Anschlussende (236) der Kurbelwelle (231) gebildet ist und das mit dem Lager (233) der Kurbelwellengehäuseeinheit (23) in Verbindung steht;
ein hohles Leitungselement (239), das eine innere Kammer bildet, die mit dem stromaufwärts und dem stromabwärts gelegenen Kanalabschnitt (237', 237") der zentralen Kanaleinheit (237) in Verbindung steht, um so den Durchfluss des Schmieröls (25) von dem stromaufwärts gelegenen Kanalabschnitt (237') in den stromabwärts gelegenen Kanalabschnitt (237") durch die innere Kammer in dem Leitungselement (239) zu erlauben; und
einen Seitenkanal (238), der zwei Enden hat, die jeweils mit dem stromabwärts gelegenen Kanalabschnitt (237") der zentralen Kanaleinheit (237) und der Kupplungskammer (220) in Verbindung stehen, um so den Durchfluss des Schmieröls (25) von dem stromabwärts gelegenen Kanalabschnitt (237") durch den Seitenkanal (238) in die Kupplungskammer (220) zu erlauben.

7. Fahrzeuggetriebe (2) nach Anspruch 6, ferner **dadurch gekennzeichnet, dass** das Lageranschlussende (237A) des stromabwärts gelegenen Kanalabschnitts (237") der zentralen Kanaleinheit (237) in der Kurbelwelle (231) einen Durchmesser hat, der kleiner ist als derjenige des übrigen Abschnitts des stromabwärts gelegenen Kanalabschnitts (237"), um so eine Durchflussmenge des Schmieröls (25) zu drosseln, wenn es von der zentralen Kanaleinheit (237) auf das Lager (233) fließt.

## Revendications

1. Transmission de véhicule (2), comportant :
une unité de carter de vilebrequin (23) incluant un carter de vilebrequin (230) et un vilebrequin (231) tourillonné dans le carter de vilebrequin (230),
une unité d'embrayage (22) disposée à proximité de l'unité de carter de vilebrequin (23), et incluant un couvercle d'étanchéité (224) coopérant avec le carter de vilebrequin (230) pour définir une chambre d'embrayage (220) entre ceux-ci, et un embrayage à huile (221) disposé dans la chambre d'embrayage (220) et pouvant tourner avec le vilebrequin (231), le vilebrequin (231) s'étendant à travers la chambre d'embrayage (220),
une unité de carter de transmission (24) disposée à proximité de l'unité d'embrayage (22), et
de l'huile de lubrification (25) disposée dans l'unité d'embrayage (22) et l'unité de carter de vilebrequin (23),
**caractérisée en ce que** le vilebrequin (231) de l'unité de carter de vilebrequin (23) s'étend à travers le couvercle d'étanchéité (224) de l'unité d'embrayage (22), et a une extrémité de connexion disposée dans l'unité de carter de transmission (24), l'unité de carter de vilebrequin (23) comportant en outre un arbre entraîné (232) disposé dans l'unité de carter de transmission (24) et ayant une extrémité manchonnée coaxialement sur l'extrémité de connexion (236) du vilebrequin (231), et un palier (233) disposé entre l'extrémité de connexion (236) du vilebrequin (231) et l'extrémité de l'arbre entraîné (232).

2. Transmission de véhicule (2) selon la revendication 1, **caractérisée en outre en ce que** le palier (233) de l'unité de carter de vilebrequin (23) est configuré sous la forme d'un palier à rouleaux.

3. Transmission de véhicule (2) selon la revendication 1, **caractérisée en outre en ce que** l'unité d'embrayage (22) comporte en outre une protection extérieure (222) disposée dans la chambre d'embrayage (220), et ayant une périphérie extérieure annulaire disposée autour de l'embrayage à huile (221), la protection extérieure (222) étant connectée de manière fixe à l'arbre entraîné (312).

4. Transmission de véhicule (2) selon la revendication 1, **caractérisée en outre en ce que** l'unité de carter de transmission (24) comporte:
un carter de transmission (240),
une unité de poulie d'entraînement (241) disposée dans le carter de transmission (240) et pouvant tourner par l'intermédiaire du vilebrequin (231), l'unité de poulie d'entraînement (241) incluant une demi-poulie d'entraînement fixe (245) manchonnée de manière fixe sur l'arbre entraîné (232), et une demi-poulie d'entraînement mobile (246) manchonnée de manière mobile sur l'arbre entraîné (232), la demi-poulie d'entraînement mobile (246) étant mobile vers la demi-poulie d'entraînement fixe (245) lorsqu'une vitesse de rotation de l'arbre entraîné (232) augmente, la demi-poulie d'entraînement mobile (246) étant mobile loin de la demi-poulie d'entraînement fixe (245) lorsque la vitesse de rotation de l'arbre entraîné (232) diminue, les demi-poulies d'entraînement fixe et mobile (245, 246) ayant des surfaces tronconiques juxtaposées (F) en vis-à-vis l'une de l'autre,
un arbre de couplage (244) tourillonné dans le carter de transmission (240),
une unité de poulie entraînée (242) disposée dans le carter de transmission (240) et incluant une demi-poulie entraînée fixe (247) manchonnée de manière fixe sur l'arbre de couplage (244), et une demi-poulie entraînée mobile (248) manchonnée de manière mobile sur l'arbre de couplage (244), les demi-poulies entraînées fixe et mobile (247, 248) ayant des surfaces tronconiques juxtaposées (F') en vis-à-vis l'une de l'autre,
une courroie en V (243) entraînée sur les unités de poulie d'entraînement et entraînée (241, 242), et s'étendant entre les surfaces tronconiques juxtaposées (F, F') des demi-poulies d'entraînement fixe et mobile (245, 246) et des demi-poulies entraînées fixe et mobile (247, 248) de manière à transférer une rotation de l'unité de poulie d'entraînement (241) vers l'unité de poulie entraînée (242), et
un ressort (249) pour rappeler la demi-poulie entraînée mobile (248) vers la demi-poulie entraînée fixe (247).

5. Transmission de véhicule (2) selon la revendication 1, **caractérisée en outre en ce que** le vilebrequin (231) de l'unité de carter de vilebrequin (23) s'étend à travers la demi-poulie d'entraînement fixe (245) de l'unité de poulie d'entraînement (241) de l'unité de carter de transmission (24).

6. Transmission de véhicule (2) selon la revendication 1, **caractérisée en outre en ce que** le vilebrequin (231) comporte :
une unité de passage central axiale (237) ayant une partie de passage amont (237') adaptée pour permettre un écoulement de l'huile de lubrification (25) à travers celle-ci lorsque l'huile de lubrification (25) est alimentée dans le vilebrequin (231), et une partie de passage aval (237") espacée de la partie de passage amont (237'), et alignée avec celle-ci, et ayant une extrémité de connexion de palier (237A) qui est formée dans l'extrémité de connexion (236) du vilebrequin (231) et qui est mise en communication avec le palier (233) de l'unité de carter de vilebrequin (23),
un élément de conduit creux (239) définissant une chambre intérieure mise en communication avec les parties de passage amont et aval (237', 237") de l'unité de passage central (237) de manière à permettre l'écoulement de l'huile de lubrification (25) à partir de la partie de passage amont (237') dans la partie de passage aval (237") via la chambre intérieure dans l'élément de conduit (239), et
un passage latéral (238) ayant deux extrémités mises en communication respectivement avec la partie de passage aval (237") de l'unité de passage central (237) et la chambre d'embrayage (220), de manière à permettre l'écoulement de l'huile de lubrification (25) à partir de la partie de passage aval (237") jusque dans la chambre d'embrayage (220) via le passage latéral (238).

7. Transmission de véhicule (2) selon la revendication 6, **caractérisée en outre en ce que** l'unité de connexion de palier (237A) de la partie de passage aval (237") de l'unité de passage central (237) dans le vilebrequin (231) a un diamètre qui est plus petit que celui de la partie restante de la partie de passage aval (237") de manière à restreindre un débit d'écoulement de l'huile de lubrification (25) lors d'un écoulement à partir de l'unité de passage central (237) jusque sur le palier (233).
